# EUROPÄISCHE PATENTANMELDUNG

(11) **EP 0 887 587 A2**
(43) Veröffentlichungstag der Anmeldung: **30.12.1998**
(21) Anmeldenummer: 98111114.9
(22) Anmeldetag: 17.06.1998
(51) Int. Cl.: F21V 23/00

(54) **System zum Zuführen von Strom an beliebige Wand- und Deckenpositionen eines Raumes**

(30) Priorität: 25.06.1997 DE 19726930
(71) Anmelder: Figge, Karl-Ludwig, Dipl.-Ing., 58706 Menden (DE); Krause, Wilhelm-Jürgen, Dipl.-Ing., 58710 Menden (DE); Frevel, Dorothée, Dipl.-Ing., 10829 Berlin (DE)
(72) Erfinder: Figge, Karl-Ludwig, Dipl.-Ing., 58706 Menden (DE); Krause, Wilhelm-Jürgen, Dipl.-Ing., 58710 Menden (DE); Frevel, Josef, Dipl.-Ing., 59821 Arnsberg (DE)
(74) Vertreter: Schröter & Haverkamp

(57) **Zusammenfassung**

Ein System zum Zuführen von Strom an beliebige Wand- und Deckenpositionen eines Raumes besteht im wesentlichen aus einer Montageplatte 3 und einer Steckereinheit 13. Die Montageplatte 3 ist ein Schichtkörper, der rückseitig eine ferromagnetische Metallplatte 6 trägt. An die ferromagnetische Metallplatte 6 grenzen in einer Wechselfolge elektrisch nicht leitende Schichten 11, 12 und elektrisch leitende Schichten (Leiter) 7, 8, 9, 10. Die Steckereinheit 13 umfaßt einen Haltemagneten 15 sowie mehrere Kontaktstifte K1, K2, K3, K4, K5, von denen zumindest zwei Kontaktstifte K1 sich auf der ferromagnetischen Metallplatte 6 abstützen. Die Länge der Kontaktstifte K1 ist größer als die Dicke des an die ferromagnetische Stahlplatte grenzenden Schichtstapels, so daß zwischen der Steckerplatte 15 und der Oberfläche der Montageplatte 3 ein Zwischenraum gebildet ist. Die Kontaktstifte K1, K2, K3, K4, K5 kontaktieren die Leiter 6, 7, 8, 9, 10 mit ihrem vorderen, zugespitzten Abschnitt, wohingegen die zylindrischen Schaftabschnitte der Kontaktstifte K1, K2, K3, K4, K5 elektrisch isoliert sind. Die Steckereinheit 13 läßt sich durch die geringe Dimensionierung der Kontaktstifte K1, K2, K3, K4, K5 hinsichtlich ihres Durchmessers manuell in die relativ weiche Montageplatte 3 eindrücken. An die Steckereinheit 13 sind dann beispielsweise mittels eines Befestigungshakens 14 Stromverbraucher anhängbar, wobei die Steckereinheit 13 durch die Magnetkraft des Haltemagneten 15 zusammenwirkend mit der ferromagnetischen Metallplatte 6 sicher einen solchen zu tragen vermag.

## Beschreibung

Die Erfindung betrifft ein System zum Zuführen von Strom an beliebige Wand- und Deckenpositionen eines Raumes umfassend eine oder mehrere als Schichtkörper aufgebaute Montageplatten mit einer Wechselfolge von elektrisch leitenden Schichten (Leitern) und elektrisch isolierenden Schichten (Isolatoren) und eine oder mehrere Steckereinheiten mit in die Montageplatte hineinreichenden Kontaktstiften zum Kontaktieren von elektrischen Leitern zum Zuführen von Strom an auf den Montageplatten angeordneten Stromverbrauchern.

Ein derartiges System ist aus der DE 37 28 117 A1 bekannt. Die Montageplatten dieses bekannten Systems weisen drei durch isolierende Schichten voneinander getrennte elektrische Leiter aus Kupferfolien auf, wobei ebenfalls die außenliegenden Kupferfolien von je einem Isolator bedeckt sind. Die Montageplatten sind aus einem relativ weichen Material hergestellt, damit die verwendeten Kontaktstifte der Steckereinheiten ohne großen Aufwand in die Montageplatten zum Kontaktieren der Stromleiter eingedrückt werden können. Zur Erleichterung eines solchen Eindrückens der Kontaktstifte sind diese vorderseitig spitz ausgebildet und weisen einen dreieckigen, zum Einschneiden geeigneten Querschnitt auf. Die Kontaktstifte schneiden sich dann beim Eindrückvorgang in die Montageplatte ein. Die Kontaktstifte sind in elektrisch leitende und elektrisch nicht leitende Bereiche unterteilt, wobei der Abstand der elektrisch leitenden Bereiche von dem montageplattenseitigen Ende der Steckereinheit dem Abstand eines Leiters von der Oberfläche der Montageplatte entspricht. Jeder Kontaktstift weist mehrere elektrisch leitende Abschnitte auf, die mit einem Leuchtkörper als Stromverbraucher verbunden sind.

Die bekannte Montageplatte umfaßt insgesamt drei elektrisch leitende Schichten, von denen zwei als Stromleiter und eine als Schutzkontaktleiter vorgesehen sind. Dabei ist die als Schutzkontaktleiter dienende Schicht als oberster Leiter vorgesehen.

Zum elektrischen Verbinden einzelner Montageplatten sind Verbindungsstecker vorgesehen, wobei ein Verbindungsstecker jeweils zwei über eine Brücke miteinander verbundene Kontaktstifte mit drei Kontaktbereichen aufweist. Die Verbindungsstecker werden in die Rückseiten der Montageplatten in diese eingedrückt.

Als Stromverbraucher sind Leuchtkörper vorgesehen, die Teil einer Steckereinheit sind. Zum Abgreifen des Stromes von den elektrisch leitenden Schichten sind an jedem Leuchtkörper zwei Kontaktstifte angeordnet, die beide den Schutzkontaktleiter und zudem jeweils einen unterschiedlichen Leiter kontaktieren. Zum Herstellen des elektrischen Kontaktes mit den Leitern wird dann der Leuchtkörper in die Montageplatte mit seinen Kontaktstiften eingedrückt. Dabei zerschneiden die Kontaktstifte die jeweiligen Leiter. Die Kontaktstifte werden so weit in die Montageplatte eingedrückt, bis der Leuchtkörper bzw. die Steckereinheit rückseitig an der Montageplatte bündig anliegt. In dieser Stellung befinden sich die jeweiligen elektrisch leitenden Abschnitte der Kontaktstifte in Kontakt mit den gewünschten Leitern der Montageplatte. Der eigentliche elektrische Kontakt ist nunmehr dadurch hergestellt, daß die durchtrennten Leiter außenseitig an der Mantelfläche der elektrisch leitenden Abschnitte der Kontaktstifte anliegen. Durch die Inhomogenität der Isolatoren kann es jedoch vorkommen, daß die durchstochenen Leiter in den benachbarten Isolator hineingedrückt werden und nur unzureichend an den Kontaktbereichen der Kontaktstifte außenseitig anliegen, so daß unter Umständen Übertragungswiderstände gebildet sind.

Damit gewährleistet ist, daß die Kontaktbereiche der Kontaktstifte bis zum jeweiligen Leiter in der Montageplatte in diese eingedrückt werden, muß der Leuchtkörper vollständig mit seiner Unterseite auf der Oberseite der Montageplatte anliegen. Um die Maßhaltigkeit nicht zu beeinträchtigen, kann eine solche Montageplatte daher nicht zusätzlich etwa mit einer Tapete oder einem Putz beschichtet werden. Eine solche Verblendung der Montageplatten ist jedoch gewünscht, um die Stöße der Montageplatten, wenn diese beispielsweise decken- oder wandseitig angebracht sind, zu verdecken. Auch wenn die Kontaktbereiche der Kontaktstifte ein gewisses Spiel erlauben, so ist nach einem Auftrag einer Tapete oder eines Putzes, welches naturgemäß zu Unebenheiten führt, nicht unbedingt gewährleistet, daß die Kontaktbereiche tatsächlich den gewünschten Leiter kontaktieren. Vielmehr besteht bei einer unzureichenden Kontaktierung die Gefahr einer Lichtbogenausbildung, was eine Zerstörung der Montageplatte zur Folge haben kann.

Die verwendeten Leuchtkörper sind reibschlüssig über die in die Montageplatte eingedrückten Kontaktstifte in dieser gehalten. Da die Montageplatte zum Eindrücken der Kontaktstifte relativ weich ausgebildet sein muß, können nur solche Leuchtkörper gehalten werden, die nur ein geringes Gewicht aufweisen.

Aus der DE 195 11 042 A1 ist ein weiteres Stromzuführungssystem bekannt, welches Montageplatten mit elektrisch leitenden Schichten und als Stromverbraucher Einbaustrahler verwendet. Die Montageplatten dieses Systems sind durch zwei außenliegende elektrisch leitende Schichten, die durch einen Isolator getrennt sind, sandwichartig aufgebaut. Zum Montieren der Einbaustrahler ist es notwendig, in die Montageplatte ein dem Durchmesser des Einbaustrahlers entsprechendes Loch einzubringen. Der Strom wird von den beiden elektrisch leitenden Schichten außenseitig durch einen Abdeckring und innenseitig durch eine elektrisch leitend ausgebildete Raste hergestellt. Nachteilig ist bei diesem System, daß die Außenseite der Montageplatte elektrisch leitend ausgebildet sein muß und somit ebenfalls nicht bedeckbar ist. Auch wenn durch den in diesem Dokument vorgeschlagenen Stromabgriff Einbaustrahler mit einem größeren Gewicht als beim Gegenstand der DE 37 28 117 A1 zum Halten gebracht werden können, bedingt dies das Einbringen einer Montageöffnung in die Montageplatte. Insbesondere bei einem Versetzen der Leuchtkörper bleiben dann die nicht benutzten Montageöffnungen sichtbar.

Aus der EP 0 116 505 B1 ist ein weiteres System zum Zuführen von Strom an bestimmte Wand- oder Deckenpositionen bekannt. Als elektrische Leiter sind in einer Ebene verschachtelt angeordnete Leiterstreifen vorgesehen, welche Leiterstreifen so angeordnet sind, daß jeweils zwei durch einen elektrischen Isolator getrennte und benachbarte Leiterstreifen unterschiedlich gepolt sind. Ein Stromverbraucher wird mit steckerartigen Stromfühlern so positioniert, daß diese die äußere isolierende Schicht durchdringen und jeweils einen unterschiedlichen Pol kontaktieren. Zum Halten der Stromverbraucher ist vorgesehen, elektrisch isoliert unterhalb der Leiterstreifen Streifen aus ferromagnetischem Material anzuordnen, die zur Befestigung von mit Magneten versehenen Verbrauchern vorgesehen sind. Um eine exakte elektrische Kontaktierung des Verbrauchers mit den Leiterstreifen herzustellen, ist es notwendig, um die Anordnung der von einer isolierenden Schicht bedeckten Leiterstreifen zu wissen.

Aus der DE 42 42 196 C1 ist eine Niedervolt-Elektrifiziereinrichtung für Kastenmöbel oder Innenausbauten bekannt, welche Druckschrift eine Verbindung von einzelnen, elektrische Schichten beinhaltenden Schichtkörper zum Inhalt hat.

Ausgehend von diesem diskutierten Stand der Technik liegt der Erfindung daher die Aufgabe zugrunde, ein System zum Zuführen von Strom an beliebige Wand- und Deckenpositionen eines Raumes vorzuschlagen, welches nicht nur eine sichere Kontaktierung der elektrisch leitenden Schichten durch die Kontaktstifte auch bei einer beschichteten oder unregelmäßigen Montageplattenoberfläche gewährleistet, sondern welches auch eine sichere Befestigung schwererer Stromverbraucher erlaubt.

Diese Aufgabe wird erfindungsgemäß dadurch gelöst, daß jeder Montageplatte eine von den Kontaktstiften nicht durchdringbare Metallplatte mit ferromagnetischen Eigenschaften im Bereich ihres befestigungsseitigen wand- bzw. deckenseitigen Abschlusses zugeordnet ist und daß jede Steckereinheit einen Haltemagneten sowie für jeden durch die Steckereinheit zu kontaktierenden Leiter zumindest einen Kontaktstift umfaßt, dessen Spitze zum Kontaktieren des Leiters dient, und jeder Kontaktstift zum Kontaktieren eines einzigen Leiters vorgesehen ist, wobei jede Steckereinheit zumindest zwei Kontaktstifte aufweist, die sich auf der ferromagnetischen Metallplatte abstützen und deren aus der Steckereinheit herausragende Länge länger als die Stärke des an die Metallplatte grenzenden Schichtstapels der Montageplatte ist.

Das erfindungsgemäße System zum Zuführen von Strom verwendet eine von den Kontaktstiften nicht durchdringbare Metallplatte, auf der sich zumindest zwei Kontaktstifte jeder Steckereinheit abstützen. Da die sich auf dieser Metallplatte abstützenden Kontaktstifte länger als die Stärke des an die Metallplatte grenzenden Schichtstapels ist, ist für die Maßgenauigkeit der die Leiter kontaktierenden Kontaktstifte nicht die Oberfläche der Montageplatte maßgeblich. Daher kann diese beispielsweise mit einer Rauhfasertapete beklebt und angestrichen sein, ohne daß die beim gewürdigten Stand der Technik auftretenden Nachteile eintreten.

Die Kontaktstifte sind so ausgebildet, daß diese mit ihrer Spitze die entsprechenden Leiter kontaktieren. Durch unterschiedliche Kontaktstiftlänge können durch unterschiedliche Kontaktstifte die unterschiedlichen Leiter kontaktiert werden. Ein Kontaktieren der Leiter mittels der Kontaktstiftspitzen hat zum Vorteil, daß die Leiter an dieser Stelle nicht durchstoßen werden, sondern lediglich gegen den angrenzenden Isolator eingedrückt werden und somit gegen die Spitze der Kontaktstifte gedrückt gehalten sind, so daß eine sichere Stromübertragung gewährleistet ist.

Da die als Montagegrund verwendete Metallplatte zudem ferromagnetische Eigenschaften aufweist, dient diese als Haltegrund für die jeweils einen Haltemagnet aufweisenden Steckereinheiten. Die Steckereinheiten sind somit nicht nur allein durch den Reibschluß der Kontaktstifte innerhalb der Montageplatte, sondern zusätzlich und maßgeblich durch die Kraft des Haltemagneten an der Montageplatte befestigt. Daher vermag eine solche Steckereinheit auch größere Lasten sicher aufzunehmen.

Jeder Kontaktstift ist lediglich zum Abgreifen eines einzigen Leiters vorgesehen. Daher kann dieser im Durchmesser relativ klein ausgebildet sein. Die sich daraus ergebenden Vorteile beziehen sich insbesondere auf die Versetzbarkeit von einmal montierten Stromverbrauchern, da nach Herausziehen einer Steckereinheit aus der Montageplatte nur sehr kleine, aus der Entfernung kaum wahrnehmbare Einstecklöcher zurückbleiben.

Durch das erfindungsgemäße System ist eine Stromzuführung im Bereich einer Montageplatte an beliebigen Stellen lediglich durch Einstecken der Steckereinheit und deren Anschluß an einen Stromverbraucher herstellbar.

In einer zweckmäßigen Ausgestaltung ist vorgesehen, daß die ferromagnetische Metallplatte elektrisch leitend ist und als Schutzleiter dient, so daß die die Metallplatte kontaktierenden Kontaktstifte als Schutzleiterkontaktstifte ausgebildet sind. Es bietet sich an, als Metallplatte beispielsweise ein Stahlblech zu verwenden.

In einer weiteren Ausgestaltung ist vorgesehen, daß als elektrische Leiter Folien aus Aluminium oder einer seiner Legierungen vorgesehen sind. Elektrische Leiter aus diesen Materialien sind preisgünstiger als solche aus Kupfer und weisen gleichwohl ausreichende elektrische Leitfähigkeiten auf. Insbesondere sind diese eloxierbar und somit vor einer Oxidation der Oberflächen schützbar.

Die Steckereinheit kann entweder unmittelbar an einem Stromverbraucher angeordnet sein, so daß der Stromverbraucher unmittelbar an der Montageplatte befestigt ist. Der Steckereinheit können jedoch auch Mittel zum Tragen eines Stromverbrauchers, etwa ein Haken, zugeordnet sein, an welchem der eigentliche Stromverbraucher, etwa ein Leuchter, aufhängbar ist. Die elektrische Verbindung zwischen dem Stromverbraucher und der Steckereinheit erfolgt sachgemäß mittels eines Kabels, welches über einen Stecker mit der Steckereinheit verbindbar ist.

In einer zweckmäßigen Ausgestaltung ist vorgesehen, daß jeder Kontaktstift ein zylindrischer Körper mit einer sich zu einem stumpfen Ende hin verjüngenden Kontaktspitze ist, dessen zylindrischer Abschnitt im wesentlichen vollständig isoliert ist.

Die Länge der sich auf der Metallplatte abstützenden Kontaktstifte ist in einem Ausführungsbeispiel nur geringfügig länger als die Stärke des an die Metallplatte grenzenden Schichtstapels. Mit einer solchen Ausgestaltung befindet sich die Steckereinheit nur im geringen Abstand von der Oberfläche der Montageplatte, so daß eine Distanzfuge ausgebildet ist. Der geringe Abstand ist ausreichend, um Unebenheiten einer Tapete, beispielsweise einer Rauhfasertapete, zu überbrücken.

In einer Weiterbildung ist der Steckereinheit ein bezüglich der Kontaktstifte tragenden Steckerplatte einrichtbares Gehäuse vorgesehen, so daß der durch die sich abstützenden Kontaktstifte begründete Abstand zur Oberfläche der Montageplatte durch das über die Steckerplatte hinausragende Gehäuse entsprechend dem jeweiligen Abstand verblendbar ist.

Zur Herstellung einer elektrischen Verbindung einzelner Montageplatten untereinander ist in einem Ausführungsbeispiel vorgesehen, daß die verwendeten Montageplatten im Bereich zumindest einer Ecke treppenstufenartig ausgebildet sind, wobei zumindest jede elektrisch leitende Schicht eine freiliegende Stufe bildet. Entsprechend komplementär ist ein Verbindungsglied ausgebildet, so daß nach Einstecken desselben die beiden benachbarten Montageplatten elektrisch miteinander verbunden sind. Dieses geschieht von der sichtbaren Oberfläche der Montageplatte her, so daß erst nach einer vollständigen Raumauskleidung mit den Montageplatten entschieden werden muß, ob und wenn ja, in welcher Art eine elektrische Segmentierung vorgenommen werden soll.

Insbesondere eignet sich das erfindungsgemäße Stromzuführungssystem für einen Einsatz im Rahmen eines BUS-Systems, mit welchem unterschiedliche Stromverbraucher gemeinsam auf der Montageplatte angebracht und angesteuert werden können.

Weitere Vorteile der Erfindung ergeben sich aus den übrigen Unteransprüchen sowie aus der nachfolgenden Beschreibung eines Ausführungsbeispieles. Es zeigen:
- **Fig. 1**: in einer schematisierten Darstellung einen Schnitt durch eine Deckenkonstruktion mit einem unterseitig an dieser angeordneten Stromzuführungssystem,
- **Fig. 2**: in einer vergrößerten Darstellung einen Ausschnitt aus dem Stromzuführungssystem der Figur 1,
- **Fig. 3**: eine Draufsicht auf eine Steckereinheit mit ihren Kontaktstiften,
- **Fig. 4**: eine Ansicht von unten auf das an einer Decke befindliche Stromzuführungssystem und
- **Fig. 5**: eine Seitenansicht zweier aneinandergrenzender Montageplatten des Stromzuführungssystems der Figur 1 entlang der Linie A-B der Figur 4.

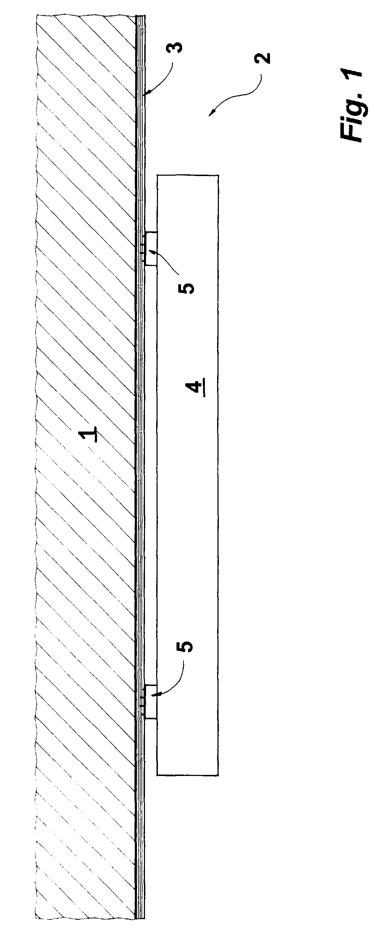

Figur 1 zeigt eine Deckenkonstruktion 1 eines nicht näher dargestellten Raumes. Unterseitig ist an die Deckenkonstruktion 1 ein Stromzuführungssystem 2 angebracht. Das Stromzuführungssystem 2 besteht im wesentlichen aus einer Montageplatte 3, die als Schichtkörper ausgebildet ist und in mehreren Ebenen übereinander liegende, sich über die gesamte Breite und Länge der Montageplatte 3 erstreckende Leiter beinhaltet. Zum Kontaktieren der Leiter sowie zum Anbringen von Stromverbrauchern an der Montageplatte 3, wie in Figur 1 beispielsweise durch eine Leuchte 4 dargestellt, sind Steckereinheiten 5 vorgesehen.

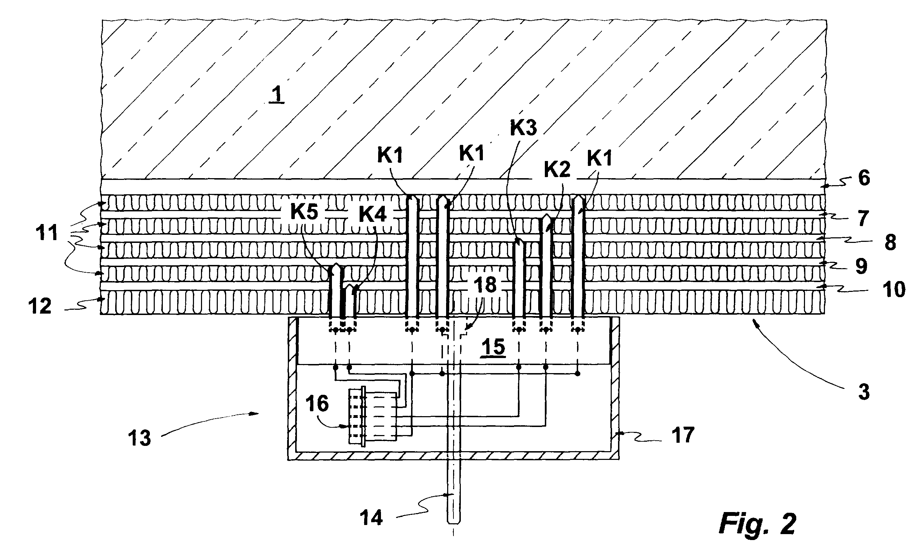

Der Aufbau der Montageplatte 3 ist in größerer Detailiertheit der Figur 2 entnehmbar. Die in Figur 2 dargestellte Montageplatte besteht aus fünf elektrisch leitfähigen Schichten 6, 7, 8, 9, 10 (Leiter), zwischen denen elektrisch isolierende Schichten 11 (Isolatoren) angeordnet sind. Der Leiter 10 ist ebenfalls mit einem Isolator 12 bedeckt, dessen Dicke größer ist als die Dicke der Isolatoren 11. Der Leiter 6 ist ein Stahlblech, dessen Dicke etwa 1 mm beträgt. Die Isolatoren 11, 12 sind aus verpreßten Dämmstoffen, etwa Steinwolle oder solche die auch Holzabfälle als Grundstoff enthalten können, hergestellt; die Dicke der Isolatoren 11 beträgt etwa 1 mm, während die Dicke des Isolators 12, welcher den unteren Abschluß der Montageplatte 3 bildet, etwa 1,5 mm beträgt. Die Leiter 7, 8, 9, 10 sind etwa 0,5 mm dicke Aluminiumfolien, deren nach unten weisende Seite zum Verhindern von Oxidationen, die eine elektrische Kontaktierung behindern könnte, eloxiert ist.

In die Montageplatte 3 ist eine Steckereinheit 13, die im wesentlichen den Steckereinheiten 5 der Figur 1 entspricht, eingesetzt. Im Unterschied zu den Steckereinheiten 5 umfaßt die Steckereinheit 13 einen Befestigungshaken 14, an dem beispielsweise eine Leuchte anhängbar ist. An der Leuchte 4 sind die Steckereinheiten 5 unmittelbar angeordnet.

Die Steckereinheit 13 besteht aus einer Steckerplatte 15, die als Haltemagnet ausgebildet ist. In die Außenseite der Steckerplatte 15 sind Kontaktstifte K1, K2, K3, K4, K5 eingesetzt und befestigt. Die Kontaktstifte K1 dienen zum Abstützen der Steckereinheit 13 auf dem Stahlblech 6. Selbst beim kräftigen Eindrücken der Steckereinheit 13 in die Montageplatte 3 ist das Stahlblech 6 nicht von den Kontaktstiften durchdringbar, so daß durch das Stahlblech 6 ein maßhaltiger Montagegrund gebildet ist. Der Abstand der Steckerplatte 15 von der Oberfläche der Montageplatte 3 ist somit durch die Länge der Kontaktstifte K1 bestimmt. Die Kontaktstifte K1 sind länger als die Stärke des an die Stahlplatte 6 grenzenden Schichtstapels, bestehend aus den Leitern 7, 8, 9, 10 und den Isolatoren 11, 12. Durch den zwischen der Steckerplatte 15 und der Oberfläche der Montageplatte 3 verbleibenden Abstand ist gewährleistet, daß oberflächliche Unebenheiten der Montageplatte oder einer darauf beispielsweise angebrachten Tapete, etwa einer Rauhfasertapete, eine elektrische Kontaktierung der Kontaktstifte K1, K2, K3, K4, K5 an den Leitern 6, 7, 8, 9, 10 nicht beeinträchtigen.

Die Kontaktstifte K1, K2, K3, K4, K5 sind vorderseitig verjüngt, eine stumpfe Spitze bildend ausgebildet. Die Kontaktstifte K1, K2, K3, K4, K5 sind im Querschnitt kreisrund und weisen einen zylindrischen Schaffabschnitt auf. Dieser ist außenseitig isoliert, so daß lediglich der Bereich der Spitzen der Kontaktstifte K1, K2, K3, K4, K5 als Kontaktfläche zur Verfügung steht. Aus Figur 2 wird deutlich, daß die Kontaktstifte K2, K3, K4, K5 die jeweils zu kontaktierenden Leiter 7, 8, 9, 10 nicht durchtrennen, sondern sich lediglich in diese eindrücken, wobei die Leiter 7, 8, 9, 10 gegebenenfalls in den jeweilig benachbarten Isolator 11 eingedruckt werden. Somit wird im wesentlichen der gesamte Bereich der Spitzen der Kontaktstifte K2, K3, K4, K5 zur Herstellung eines Kontaktes genutzt. Die Kontaktfläche ist somit ausreichend groß bemessen, so daß die Kontaktierung keinen Übertragungswiderstand bildet.

Die in der Steckerplatte 15 befestigten Enden der Kontaktstifte K1, K2, K3, K4, K5 sind über Leitungen mit einer Steckdose 16 verbunden, die entweder innerhalb eines der Steckereinheit 13 zugeordneten Gehäuses 17 oder in der umlaufenden Wand des Gehäuses 17 selbst angeordnet sein kann. In die Steckdose 16 ist das elektrische Verbindungskabel des Stromverbrauchers mit einem entsprechenden Gegenstecker einsteckbar.

Der Befestigungshaken 14 ist durch einen an seinem rückwärtigen Ende angeordneten Befestigungsflansch 18 in einer entsprechenden, in die Stirnseite der Steckerplatte 15 eingebrachten Ausnehmung gehalten.

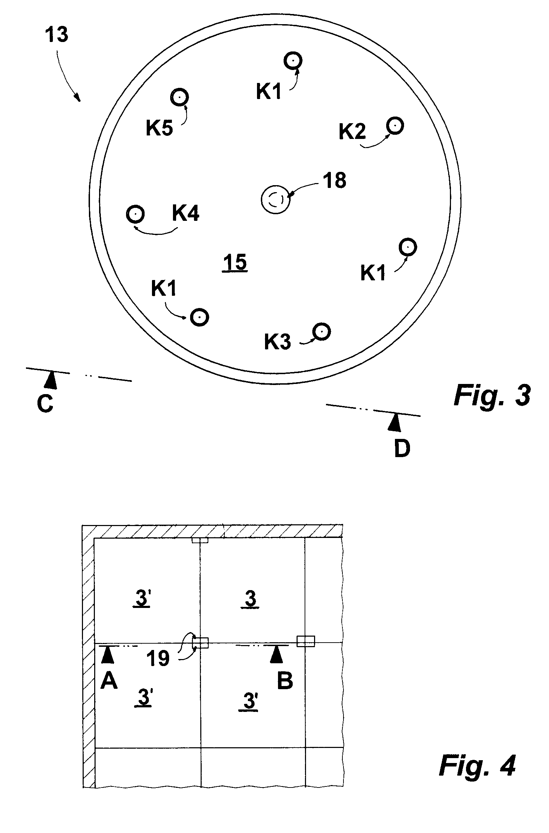

Die Steckereinheit 13 ist kreisrund ausgebildet, wie aus Figur 3 ersichtlich, in welcher die Steckereinheit 13 in einer Draufsicht auf die Steckerplatte 15 dargestellt ist. Die Steckerplatte 15 ist ein Scheibenmagnet. Ferner ergibt sich aus Figur 3 die Anordnung der Kontaktstifte K1, K2, K3, K4, K5, die mit gleichem radialen Abstand von dem durch den Befestigungsflansch 18 des Befestigungshakens 14 gebildeten Mittelpunkt angeordnet sind. Die Kontaktstifte K1 sind ein Dreieck bildend angeordnet, damit durch die Kontaktstifte K1 eine stabile Dreipunktauflage auf dem Stahlblech 6 gewährleistet ist. Dadurch ist sichergestellt, daß die Ebene der Steckereinheit 13 parallel zum Stahlblech 6 angeordnet ist und die Kontaktstifte K2, K3, K4, K5 mit ihrer Spitze ihre bestimmungsgemäße Eindringtiefe in die Montageplatte 3 erreichen. Durch die Linie C-D ist die Ansicht der Figur 2 dargestellt, wobei das Gehäuse 17 in Figur 2 im Schnitt dargestellt ist.

Zum Herstellen eines elektrischen Kontaktes zwischen den Kontaktstiften K1, K2, K3, K4, K5 und den elektrischen Leitern 6, 7, 8, 9, 10 wird die Steckereinheit 13 manuell in die relativ weiche Montageplatte 3 eingedrückt. Die Eindrückbewegung endet dann, wenn die Kontaktstifte K1 das Stahlblech 6 erreichen. Da die Länge der Kontaktstifte K2, K3, K4, K5 auf die definierte Tiefenlage der Leiter 7, 8, 9, 10 abgestimmt ist, ist in dieser Stellung gewährleistet, daß tatsächliche eine Kontaktierung stattfindet.

Bei dem in Figur 2 dargestellten Ausführungsbeispiel sind die Stahlplatte 6 sowie die Kontaktstifte K1 als Schutzkontaktleiter und somit als Erdungspol vorgesehen. Die Leiter 7 und 8 sind zwei unabhängig voneinander strombeaufschlagte Leiter, die entsprechend von den Kontaktstiften K2 und K3 abgegriffen werden. Der Leiter 10 ist als Null-Leiter vorgesehen und wird von dem Kontaktstift K5 abgegriffen. Der Leiter 9 ist eine Steuerleitung, die von dem Kontaktstift K4 abgegriffen wird. Die Montageplatte 3 ist in der dargestellten Anordnung Teil eines BUS-Systemes, über welches zahlreiche Stromverbraucher zentral ansteuerbar sind. Die Leiter 7, 8 sind in dem dargestellten Ausführungsbeispiel somit unterschiedliche und unabhängig voneinander zentral steuerbare Stromkreise.

Figur 4 zeigt den Deckenspiegel des Raumes, in dem die Montageplatte 3 neben weiteren Montageplatten 3' befestigt ist. Die Montageplatten 3, 3' weisen im Bereich einiger ihrer Ecken treppenstufenartig freigelegte Anschlußbereiche auf, mit denen die einzelnen Montageplatten 3, 3' untereinander, wenn erwünscht, elektrisch verbindbar und mit denen die Montageplatten 3, 3' an die übrige gebäudeseitige Elektroinstallation anschließbar sind. Mit Hilfe dieser Anschlußecken ist es möglich, einzelne Montageplatten 3, 3' wenn erwünscht elektrisch leitend miteinander zu verbinden oder diese elektrisch isoliert voneinander zu belassen. Auf diese Weise ist eine elektrische Deckensegmentierung möglich, um einzelne Deckenbereichen unterschiedlichen Stromzuführungs- und Steuerungssystemen zuordnen zu können.

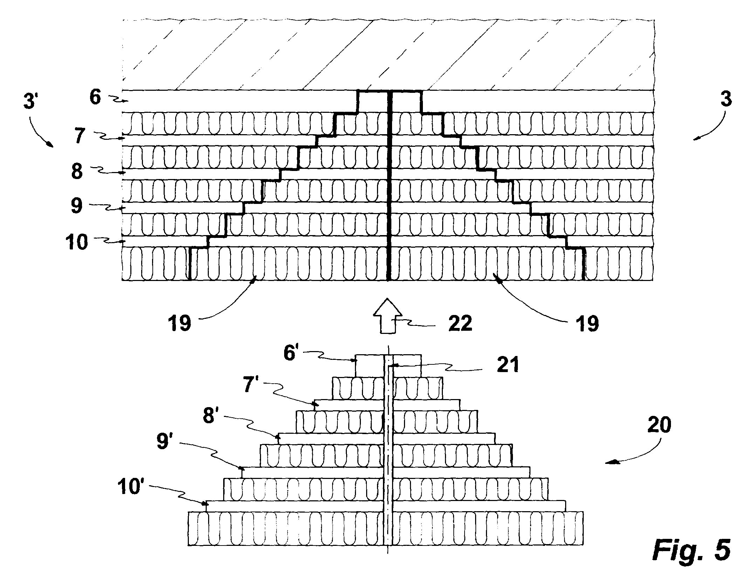

In Figur 5 ist vergrößert eine Seitenansicht entlang der Linie A-B der Figur 4 auf die Montageplatten 3, 3' gezeigt. Beide Montageplatten sind im Bereich ihrer Ecken 19 treppenstufenartig ausgebildet, wobei jede Schicht 6, 7, 8, 9, 10, 11, 12 eine freiliegende Stufe bildet. Gleichfalls wird aus dieser Figur erkennbar, daß die Montageplatten 3, 3' randlich isoliert sind, so daß der durch die Montageplatten 3, 3' gebildete Stoß nicht ohne weiteres zu einer Durchkontaktierung der elektrischen Leiter 6, 7, 8, 9, 10 führt. Zur Herstellung einer elektrischen Verbindung der beiden Montageplatten 3, 3' ist ein Verbindungsglied 20 - im Schnitt dargestellt - vorgesehen, welches komplementär zu der durch die Montageplatten 3, 3' bzw. durch deren Anschlußbereiche 19 gebildeten Kammer ausgebildet ist. Das Verbindungsglied 20 weist zentral eine Befestigungsöffnung 21 auf, durch welche eine Befestigungsschraube zum Festsetzen des Verbindungsgliedes 20 in den Anschlußbereichen 19 der Montageplatten 3, 3' möglich ist. Die Befestigungsöffnung 21 ist außenseitig durch eine Kunststoffhülse isoliert, damit verhindert ist, daß eine zur Befestigung vorgesehene Schraube Kurzschlüsse zwischen einzelnen Leitern bewirkt. Die elektrische Verbindung der beiden Montageplatten 3, 3' erfolgt somit durch Anlegen der elektrischen Leiter 6', 7', 8', 9', 10' des Verbindungsgliedes 20 an die elektrischen Leiter 6, 7, 8, 9, 10 der beiden Montageplatten 3, 3'. Die Einsteckbewegung des Verbindungsgliedes 20 ist durch den Pfeil 22 in Figur 5 angedeutet.

Damit die Montageplatten 3, 3' beim Ausschalten eines Stromverbrauchers nicht als Plattenkondensator wirken, sind als Schalter solche Schalter vorgesehen, die einen sogenannten Wischer umfassen, mittels welchem die Leiter beim Ausschalten geerdet werden.

Aus der Beschreibung der Erfindung wird deutlich, daß das erfindungsgemäße Stromzuführungssystem geeignet ist, eine sichere Kontaktierung zu gewahrleisten und ebenfalls Stromverbraucher mit höheren Gewichten deckenseitig zu tragen. Bei einem Umsetzen einzelner Steckereinheiten 13 auf den Montageplatten 3, 3' verbleiben lediglich im Durchmesser kleine Einstecköffnungen zurück, die, sollten die Montageplatten 3, 3' oberseitig mit einer Tapete beklebt oder verputzt ein, problemlos verschließbar sind, falls erforderlich. Ferner wird aus der Beschreibung der Erfindung deutlich, daß die elektrische Installation eines Raumes nahezu beliebig einrichtbar und auch nach einer Erstinstallation beliebig änderbar ist. Gerade im Hinblick auf Räume, in denen eine oftmalige Änderung der elektrischen Installation notwendig ist, läßt sich dieses Stromzuführungssystem sinnvoll einsetzen.

### Zusammenstellung der Bezugszeichen

- 1: Deckenkonstruktion
- 2: Stromzuführungssystem
- 3: Montageplatte
- 4: Leuchte
- 5: Steckereinheit
- 6, 6': elektrisch leitende Schicht (Leiter)
- 7, 7': elektrisch leitende Schicht (Leiter)
- 8, 8': elektrisch leitende Schicht (Leiter)
- 9, 9': elektrisch leitende Schicht (Leiter)
- 10, 10': elektrisch leitende Schicht (Leiter)
- 11: elektrisch isolierende Schicht (Isolator)
- 12: elektrisch isolierende Schicht (Isolator)
- 13: Steckereinheit
- 14: Befestigungshaken
- 15: Steckerplatte, Haltemagnet
- 16: Steckdose
- 17: Gehäuse
- 18: Befestigungsflansch
- 19: Anschlußbereich
- 20: Verbindungsglied
- 21: Befestigungsöffnung
- 22: Pfeil
- K1: Kontaktstift
- K2: Kontaktstift
- K3: Kontaktstift
- K4: Kontaktstift
- K5: Kontaktstift

## Patentansprüche

1. System zum Zuführen von Strom an beliebige Wand- und Deckenpositionen eines Raumes umfassend eine oder mehrere als Schichtkörper aufgebaute Montageplatten (3, 3') mit einer Wechselfolge von elektrisch leitenden Schichten (Leitern) (6, 7, 8, 9, 10) und elektrisch isolierenden Schichten (Isolatoren) (11, 12) und eine oder mehrere Steckereinheiten (5, 13) mit in die Montageplatte (3, 3') hineinreichenden und in diese eindrückbaren Kontaktstiften (K1, K2, K3, K4, K5) zum Kontaktieren von elektrischen Leitern zum Zuführen von Strom an auf den Montageplatten (3, 3') angeordneten Stromverbrauchern (4) **dadurch gekennzeichnet**, daß jeder Montageplatte (3, 3') eine von den Kontaktstiften (K1, K2, K3, K4, K5) nicht durchdringbare Metallplatte (6) mit ferromagnetischen Eigenschaften im Bereich ihres befestigungsseitigen wand- bzw. deckenseitigen Abschlusses zugeordnet ist und daß jede Steckereinheit (5, 13) einen Haltemagneten (15) sowie für jeden durch die Steckereinheit (5, 13) zu kontaktierenden Leiter (6, 7, 8, 9, 10) zumindest einen Kontaktstift (K1, K2, K3, K4, K5) umfaßt, dessen Spitze zum Kontaktieren des Leiters (6, 7, 8, 9, 10) dient, und jeder Kontaktstift (K1, K2, K3, K4, K5) zum Kontaktieren eines einzigen Leiters (6, 7, 8, 9, 10) vorgesehen ist, wobei jede Steckereinheit (5, 13) zumindest zwei Kontaktstifte (K1) aufweist, die sich auf der ferromagnetischen Metallplatte (6) abstützen und deren aus der Steckereinheit (5, 13) herausragende Länge länger als die Stärke des an die Metallplatte (6) grenzenden Schichtstapels der Montageplatte (3, 3') ist.

2. Stromzuführungssystem nach Anspruch 1, **dadurch gekennzeichnet,** daß die ferromagnetische Metallplatte (6) elektrisch leitend ist und als Schutzleiter dient.

3. Stromzuführungssystem nach Anspruch 2, **dadurch gekennzeichnet,** daß die ferromagnetische Metallplatte ein Stahlblech (6) ist.

4. Stromzuführungssystem nach einem der Ansprüche 1 bis 3, **dadurch gekennzeichnet,** daß die elektrischen Leiter (7, 8, 9, 10) Folien aus Aluminium oder einer seiner Legierungen sind, deren zur Steckereinheit (5, 13) weisende Seiten zur Verhinderung einer Oxidation behandelt sind.

5. Stromzuführungssystem nach einem der Ansprüche 1 bis 4, **dadurch gekennzeichnet,** daß einer Steckereinheit (13) Mittel (4) zum Tragen eines Stromverbraucher zugeordnet sind.

6. Stromzuführungssystem nach einem der Ansprüche 1 bis 5, **dadurch gekennzeichnet,** daß ein Kontaktstift (K1, K2, K3, K4, K5) ein zylindrischer Körper mit einer sich zu einem stumpfen Ende hin verjüngenden Kontaktspitze aus einem elektrisch leitenden Material ist, dessen zylindrischer Abschnitt im wesentlichen vollständig elektrisch Isoliert ist.

7. Stromzuführungssystem nach einem der Ansprüche 1 bis 6, **dadurch gekennzeichnet,** daß die Länge der zum Abstützen auf der Metallplatte (6) vorgesehenen Kontaktstifte (K1) nur geringfügig länger als die Stärke des an die Metallplatte (6) grenzenden Schichtstapels der Montageplatte ist.

8. Stromzuführungssystem nach einem der Ansprüche 1 bis 7, **dadurch gekennzeichnet,** daß eine Steckereinheit (13) kreisrund ausgebildet ist sowie einen Scheibenmagneten (15) umfaßt und daß außenrandnah drei ein Dreieck bildende Schutzleiterkontaktstifte (K1) zum Abstützen der Steckereinheit (13) auf der Metallplatte (6) vorgesehen sind.

9. Stromzuführungssystem nach einem der Ansprüche 8, **dadurch gekennzeichnet,** daß die weiteren Kontaktstifte (K2, K3, K4, K5) denselben radialen Mittelpunktsabstand wie die Schutzleiterkontaktstifte (K1) aufweisen.

10. Stromzuführungssystem nach einem der Ansprüche 1 bis 9, **dadurch gekennzeichnet,** daß die Steckereinheit ein Gehäuse umfaßt, welches bezüglich einer die Kontaktstifte tragenden Steckerplatte einrichtbar ist.

11. Stromzuführungssystem nach Anspruch 10, **dadurch gekennzeichnet,** daß der Haltemagnet (15) die Steckerplatte ist.

12. Stromzuführungssystem nach einem der Ansprüche 1 bis 11, **dadurch gekennzeichnet,** daß das System Verbindungsglieder (20) zum Anschließen der Montageplatten (3, 3') an bestehende elektrische Installationen sowie zum elektrischen Verbinden einzelner Montageplatten (3, 3') untereinander umfaßt.

13. Stromzuführungssystem nach einem der Ansprüche 1 bis 12, **dadurch gekennzeichnet,** daß jede Montageplatte (3, 3') im Bereich (19) zumindest einer seiner Ecken treppenstufenartig ausgebildet ist, wobei zumindest jeder Leiter (6, 7, 8, 9, 10) eine freiliegende Stufe bildet.

14. Stromzuführungssystem nach Anspruch 12 und 13, **dadurch gekennzeichnet,** daß ein Verbindungsglied (20) ein Schichtkörper mit einem der Montageplatte (3, 3') entsprechenden schichtigen Aufbau ist, dessen zur Verbindung vorgesehen Randbereiche komplementär zur treppenstufenartigen Ausbildung der Eckbereiche (19) der Montageplatten (3, 3') ausgebildet sind.

15. Stromzuführungssystem nach einem der Ansprüche 1 bis 14, **dadurch gekennzeichnet,** daß neben einer elektrisch leitenden Schicht (6) für den Schutzkontaktleiter vier weitere elektrische Leiter (7, 8, 9, 10) vorgesehen sind, von denen zwei für die Stromzuführung (7, 8), einer als Nulleiter (10) und ein weiterer als Steuerleiter (9) zum Einsatz des Systems (2) im Rahmen eines BUS-Systems vorgesehen sind.
